# EUROPÄISCHE PATENTANMELDUNG

(11) **EP 0 907 071 A1**
(43) Veröffentlichungstag der Anmeldung: **07.04.1999**
(21) Anmeldenummer: 98117399.0
(22) Anmeldetag: 14.09.1998
(51) Int. Cl.: G01F 23/74, G01F 23/56, G01F 23/32, G01F 23/38

(54) **Sensoreinrichtung zum Erfassen von Grenzfüllständen einer Flüssigkeit in einem Vorratsbehälter**

(30) Priorität: 02.10.1997 DE 19743605
(71) Anmelder: Mannesmann VDO Aktiengesellschaft, 60388 Frankfurt am Main (DE)
(72) Erfinder: Petzold, Sven, 65191 Wiesbaden (DE)
(74) Vertreter: Klein, Thomas, Dipl.-Ing.

(57) **Zusammenfassung**

Eine Sensoreinrichtung zum Erfassen von Grenzfüllständen (8, 12) einer Flüssigkeit (2) in einem Vorratsbehälter (1) hat einen Schwimmer (4) zur Betätigung eines elektrischen Schalters (9) bei einem minimalen Füllstand (12) und eine Marke (7), die bei maximalem Füllstand (8) am Vorratsbehälter (1) ein optisches Signal erzeugt. Zum Erzeugen eines vorgesehenen Luftpolsters oberhalb der Flüssigkeit (2) ist die Marke (7) auf einem Abstandhalter (6) angeordnet. Hierdurch wird eine den Vorratsbehälter (1) nachfüllende Person rechtzeitig vor einem Überfüllen des Vorratsbehälters (1) gewarnt.

## Beschreibung

Die Erfindung betrifft eine Sensoreinrichtung zum Erfassen von Grenzfüllständen einer Flüssigkeit in einem Vorratsbehälter, insbesondere in einem Scheibenwaschwasserbehälter oder Kühlwasserbehälter eines Kraftfahrzeuges, mit einem dem Flüssigkeitsspiegel folgenden Schwimmer zum Betätigen eines elektrischen Schalters bei einem minimalen Füllstand.

Solche Einrichtungen werden in Vorratsbehältern von heutigen Kraftfahrzeugen häufig eingesetzt und sind aus der Praxis bekannt. Hierbei hat der Schwimmer beispielsweise einen Magneten zur Betätigung des als Reedkontakt ausgebildeten elektrischen Schalters beim minimalen Füllstand der Flüssigkeit im Vorratsbehälter. Dieser Schalter steuert eine auf einem Armaturenbrett im Kraftfahrzeug angeordnete Signallampe an und signalisiert damit dem Fahrer des Kraftfahrzeuges, daß der Vorratsbehälter nachgefüllt werden muss, bevor dieser restlos leer ist. Hierdurch wird beispielsweise dem Eindringen von Luft in einen Kühlwasserkreislauf oder dem Trockenlaufen einer Scheibenwaschpumpe vorgebeugt. Weiterhin sind aus der Praxis durchsichtige Vorratsbehälter bekannt geworden, bei denen eine Markierung in maximaler Füllhöhe angeordnet ist. Die in maximaler Füllhöhe angeordnete Markierung soll ein Überfüllen des Vorratsbehälters beim Nachfüllen verhindern. Ein Überfüllen des Vorratsbehälters ist zu vermeiden, da ein Luftpolster oberhalb des Flüssigkeitsspiegels eine erforderliche Ausdehnung der Flüssigkeit in dem Vorratsbehälter gewährleisten soll. Eine Überfüllung des Vorratsbehälters führt zudem zum Verschmutzen und zu Korrosion von an den Vorratsbehälter angrenzenden Bauteilen.

Nachteilig bei der bekannten Sensoreinrichtung ist, daß die Markierung für den maximalen Füllstand häufig beim Nachfüllen übersehen und daher der Vorratsbehälter oft überfüllt wird.

Der Erfindung liegt das Problem zugrunde, eine Sensoreinrichtung der eingangs genannten Art so zu gestalten, daß sich der Füllstand der Flüssigkeit besonders einfach und sicher in dem vorgesehenen Bereich zwischen den Grenzfüllständen halten läßt.

Dieses Problem wird erfindungsgemäß gelöst durch eine bei Erreichen eines maximalen Füllstandes wirksame, im Bereich des Vorratsbehälters wahrnehmbare Warneinrichtung.

Durch diese Gestaltung wird der Flüssigkeit nachfüllenden Person am Vorratsbehälter das Erreichen des maximalen Füllstandes mittels der Warneinrichtung signalisiert. Die Gefahr eines Überfüllens des Vorratsbehälters wird deutlich verringert. Der minimale Füllstand im Vorratsbehälter kann wie bei der bekannten Sensoreinrichtung erfasst und beispielsweise mittels einer Signallampe auf dem Armaturenbrett angezeigt werden. Erst die Kombination des bei minimalen Füllstand angeordneten elektrischen Schalters mit der Warneinrichtung für den maximalen Füllstand ermöglicht es, den Füllstand der Flüssigkeit besonders einfach und zuverlässig in dem vorgesehenen Bereich im Vorratsbehälter zwischen den Grenzfüllständen zu halten. Daher wird beispielsweise bei dem in einem Kühlwasserkreislauf einer Brennkraftmaschine eingesetzten Vorratsbehälter ein Eindringen von Luft in den Kühlwasserkreislauf sowie das Verschmutzen und Korrodieren von an den Vorratsbehälter angrenzenden Bauteilen des Kraftfahrzeuges gleichermaßen verhindert.

Die Warneinrichtung könnte beispielsweise ein Signalhorn zur Erzeugung von akustischen Signalen aufweisen. Ein solches Signalhorn würde jedoch womöglich beim Ausdehnen der Flüssigkeit im Vorratsbehälter unerwünschte, im Bereich des Fahrgastraums des Kraftfahrzeuges wahrnehmbare Geräusche erzeugen. Signale der Warneinrichtung sind gemäß einer vorteilhaften Weiterbildung der Erfindung nicht in der Fahrgastzelle wahrnehmbar, wenn die Warneinrichtung zur Erzeugung eines optischen Signals am Vorratsbehälter ausgebildet ist.

Die Warneinrichtung könnte beispielsweise einen elektrischen Schalter aufweisen, der von dem Schwimmer bei Erreichen des maximalen Füllstandes im Vorratsbehälter betätigt wird. Hierdurch ließe sich eine an der Außenseite des Vorratsbehälters angeordnete Signallampe ansteuern. Die Warneinrichtung gestaltet sich jedoch gemäß einer anderen vorteilhaften Weiterbildung der Erfindung besonders kostengünstig, wenn die Warneinrichtung ein in der Wandung des Vorratsbehälters oberhalb des Schwimmers angeordnetes Sichtfenster aufweist. Hierdurch kann die nachfüllende Person die Position des Schwimmers sehen und direkt erkennen, ob der maximale Füllstand erreicht ist.

Die Position des Schwimmers und damit der Füllstand im Vorratsbehälter ist gemäß einer anderen vorteilhaften Weiterbildung der Erfindung besonders leicht zu erkennen, wenn der Schwimmer senkrecht unterhalb einer Einfüllöffnung des Vorratsbehälters angeordnet ist.

Das Erreichen des maximalen Füllstandes wird dem Nachfüllenden gemäß einer anderen vorteilhaften Weiterbildung der Erfindung besonders deutlich signalisiert, wenn der Schwimmer zur Bewegung einer farbigen Marke gegen das Sichtfenster oder in den Bereich der Einfüllöffnung bei maximalem Füllstand ausgebildet ist.

Eine zuverlässige Führung des Schwimmers gegen das Sichtfenster oder in den Bereich der Einfüllöffnung gestaltet sich gemäß einer anderen vorteilhaften Weiterbildung der Erfindung besonders kostengünstig, wenn der Schwimmer ringförmig gestaltet und von einem im Vorratsbehälter angeordneten Dorn geführt ist.

Ein im Vorratsbehälter vorgesehener Luftraum läßt sich gemäß einer anderen vorteilhaften Weiterbildung der Erfindung einfach begrenzen, wenn die Marke auf einem Abstandhalter angeordnet ist.

Der Fahrer des Kraftfahrzeuges wird gemäß einer anderen vorteilhaften Weiterbildung der Erfindung vor Erreichen des minimalen Füllstandes im Vorratsbehälter auf ein Nachfüllen hingewiesen, wenn in einem vorgesehenen Abstand oberhalb eines elektrischen Schalters für den minimalen Füllstand ein zweiter elektrischer Schalter angeordnet und wenn der zweite elektrische Schalter zum Ansteuern einer auf einem Armaturenbrett angeordneten Signallampe ausgebildet ist. Durch diese Gestaltung wird der Fahrer des Kraftfahrzeuges bei einer geringen Menge der Flüssigkeit im Vorratsbehälter frühzeitig gewarnt, so daß die Gefahr eines Unterschreitens des minimalen Füllstandes der Flüssigkeit deutlich verringert wird. Störende Signale der vor Erreichen des minimalen Füllstandes ansteuerbaren Signallam

pe lassen sich gemäß einer anderen vorteilhaften Weiterbildung der Erfindung während der Fahrt des Kraftfahrzeuges einfach vermeiden, wenn die Signallampe unmittelbar nach Einschalten oder nach Ausschalten der Zündung des Kraftfahrzeuges für eine vorbestimmbare Zeitspanne ansteuerbar ist.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen Vorratsbehälter mit einer erfindungsgemäßen Einrichtung,
- Fig.2: einen Vorratsbehälter mit einer Variante der erfindungsgemäßen Einrichtung.

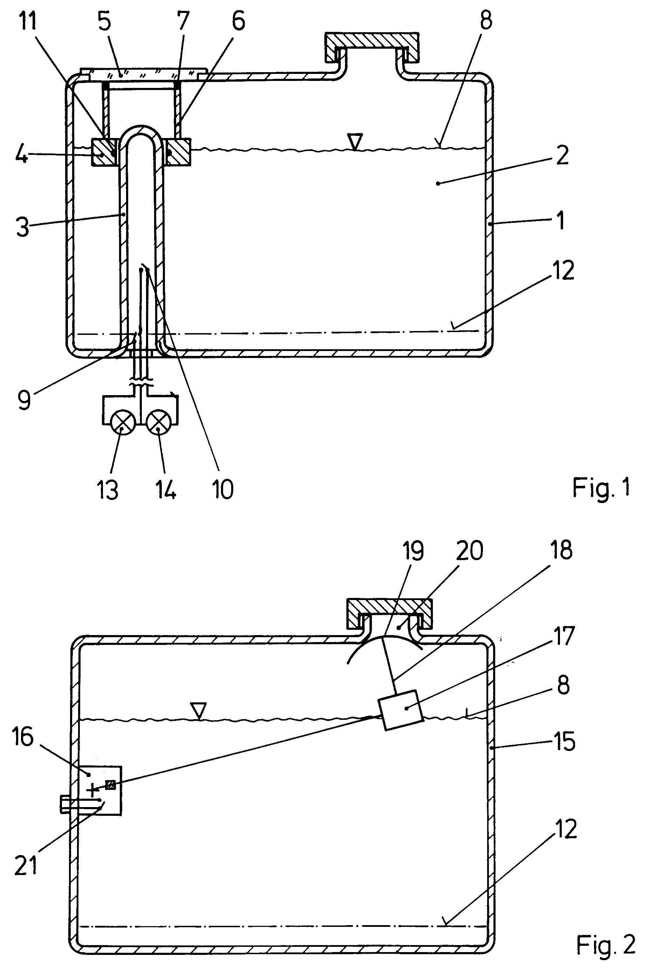

**Fig. 1** zeigt einen Vorratsbehälter 1 für eine Flüssigkeit 2 mit einer erfindungsgemäßen Einrichtung. Die erfindungsgemäße Sensoreinrichtung hat einen ringförmigen, von einem Dorn 3 geführten Schwimmer 4, der dem Flüssigkeitsspiegel folgt. Der Vorratsbehälter 1 kann beispielsweise ein Scheibenwaschwasserbehälter oder ein Kühlwasserbehälter eines Kraftfahrzeugs sein. Der Dorn 3 ist unmittelbar unterhalb eines Sichtfensters 5 angeordnet. Der Schwimmer 4 weist eine auf einem Abstandhalter 6 angeordnete, farbige Marke 7 auf, die bei dem eingezeichneten maximalen Füllstand 8 gegen das Sichtfenster 5 gelangt. Hierdurch verändert ein Teilbereich des Sichtfensters 5 seine Farbe, wodurch einer den Vorratsbehälter 1 nachfüllenden Person beim Erreichen des maximalen Füllstandes 8 ein unmittelbares optisches Signal geliefert wird. Die Marke 7 bildet damit eine unübersehbare Warneinrichtung, die signalisiert, daß der Vorratsbehälter 1 ausreichend gefüllt ist.

Im Innern des Dorns 3 sind zwei als Reedkontakte ausgebildete elektrische Schalter 9, 10 angeordnet. Diese Schalter 9, 10 werden von einem auf dem Schwimmer 4 angeordneten Magneten 11 geschaltet und erzeugen ein elektrisches Signal. Einer der elektrischen Schalter 9 befindet sich in Höhe eines, in der Zeichnung strichpunktiert dargestellten minimalen Füllstandes 12, während der zweite elektrische Schalter 10 geringfügig oberhalb des ersten elektrischen Schalters 9 angeordnet ist. Der erste elektrische Schalter 9 steuert beispielsweise eine auf einem nicht dargestellten Armaturenbrett angeordnete Signallampe 13 an und signalisiert, daß der Vorratsbehälter 1 nachgefüllt werden muss. Dieser elektrische Schalter 9 ist in einer Höhe angeordnet, bei der eine geringe Restmenge an Flüssigkeit 2 in dem Vorratsbehälter 1 verbleibt. Der zweite elektrische Schalter 10 dient zum kurzzeitigen Ansteuern einer Signallampe 14 nach einem Einschalten oder Ausschalten des Hauptschalters (Zündung) des Kraftfahrzeuges (indem er z. B. ein geeignetes Zeitglied aktiviert). Durch die von dem zweiten elektrischen Schalter 10 angesteuerte Signallampe 14 wird dem Fahrer des Kraftfahrzeuges angezeigt, daß der Vorratsbehälter 1 in Kürze nachgefüllt werden muß. Hierdurch wird der Fahrer des Kraftfahrzeuges beispielsweise vor längeren Fahrten oder beim Tanken frühzeitig auf ein Nachfüllen des Vorratsbehälters 1 hingewiesen.

**Fig. 2** zeigt einen Vorratsbehälter 15 mit einer weiteren Ausführungsform der erfindungsgemäßen Einrichtung. Hierbei hat die erfindungsgemäße Sensoreinrichtung einen schwenkbar in einem Lagerbock 16 gelagerten Schwimmer 17. Der Schwimmer 17 hat eine auf einem Abstandhalter 18 angeordnete Marke 19, die bei maximalem Füllstand 8 in den Bereich einer Einfüllöffnung 20 des Vorratsbehälters 15 gelangt. Die Marke 19 die signalisiert hierbei unübersehbar, daß der Vorratsbehälter 15 ausreichend gefüllt ist. Sie kann ggf. auch die Einfüllöffnung verschließen.

Weiterhin ist auf dem Lagerbock 16 ein elektrischer Schalter 21 angeordnet. Dieser Schalter 21 wird von dem Schwimmer 17 bei Erreichen des minimalen Füllstandes 12 im Vorratsbehälter 15 betätigt und erzeugt ein Signal, das beispielsweise wie bei der in Fig. 1 dargestellten Ausführungsform der erfindungsgemäßen Sensoreinrichtung angezeigt werden kann.

## Patentansprüche

1. Sensoreinrichtung zum Ertassen von Grenzfüllständen einer Flüssigkeit in einem Vorratsbehälter, insbesondere in einem Scheibenwaschwasser- oder Kühlwasserbehälter eines Kraftfahrzeuges, mit einem dem Flüssigkeitsspiegel folgenden Schwimmer zur Betätigung mindestens eines elektrischen Schalters bei einem minimalen Füllstand, **gekennzeichnet durch** eine bei Erreichen eines maximalen Füllstandes (8) ansteuerbare, im Bereich des Vorratsbehälters (1, 15) wahrnehmbare Warneinrichtung (Marke 7, 19).

2. Sensoreinrichtung nach Anspruch 1, **dadurch gekennzeichnet**, daß die Warneinrichtung (Marke 7, 19) zum Erzeugen eines optischen Signals am Vorratsbehälter (1, 15) ausgebildet ist.

3. Sensoreinrichtung nach Anspruch 1 oder 2, **dadurch gekennzeichnet**, daß die Warneinrichtung ein in der Wandung des Vorratsbehälters (1) oberhalb des Schwimmers (4) angeordnetes Sichtfenster (5) aufweist.

4. Sensoreinrichtung nach zumindest einem der vorhergehenden Ansprüche, **dadurch gekennzeichnet**, daß der Schwimmer (17) senkrecht unterhalb einer Einfüllöffnung (20) des Vorratsbehälters (15) angeordnet ist.

5. Sensoreinrichtung nach zumindest einem der vorhergehenden Ansprüche, **dadurch gekennzeichnet**, daß der Schwimmer (4) zum Bewegen einer farbigen Marke (7, 19) gegen das Sichtfenster (5) oder in den Bereich der Einfüllöffnung (20) bei maximalem Füllstand (8) ausgebildet ist.

6. Sensoreinrichtung nach zumindest einem der vorhergehenden Ansprüche, **dadurch gekennzeichnet**, daß der Schwimmer (4) ringförmig gestaltet und von einem im Vorratsbehälter (1) angeordneten Dorn (3) geführt ist.

7. Sensoreinrichtung nach zumindest einem der vorhergehenden Ansprüche, **dadurch gekennzeichnet**, daß die Marke (7, 19) auf einem Abstandhalter (6, 18) angeordnet ist.

8. Sensoreinrichtung nach zumindest einem der vorhergehenden Ansprüche, **dadurch gekennzeichnet**, daß in einem vorgesehenen Abstand oberhalb eines elektrischen Schalters (9) für den minimalen Füllstand (12) ein zweiter elektrischer Schalter (10) angeordnet und daß der zweite elektrische Schalter (10) zur Ansteuerung einer auf einem Armaturenbrett angeordneten Signallampe (14) ausgebildet ist.

9. Sensoreinrichtung nach zumindest einem der vorhergehenden Ansprüche, **dadurch gekennzeichnet**, daß die Signallampe (14) unmittelbar nach Einschalten oder nach Ausschalten der Zündung des Kraftfahrzeuges für eine vorgesehene Zeitspanne ansteuerbar ist.
